# EUROPÄISCHE PATENTSCHRIFT

(11) **EP 2 954 087 B1**
(45) Veröffentlichungstag und Bekanntmachung des Hinweises auf die Patenterteilung: **20.03.2019**
(21) Anmeldenummer: 14700072.3
(22) Anmeldetag: 06.01.2014
(51) Int. Cl.: C23C 2/40, C23C 28/02

(54) **METALLISCHES, DURCH SCHMELZTAUCHBESCHICHTEN OBERFLÄCHENVEREDELTES FLACHERZEUGNIS, VORZUGSWEISE AUS STAHL**
METAL FLAT PRODUCT, PREFERABLY CONSISTING OF STEEL, WITH A SURFACE IMPROVED BY HOT-DIP COATING
PRODUIT MÉTALLIQUE PLAT, DE PRÉFÉRENCE EN ACIER, À FINISSAGE SUPERFICIEL PAR REVÊTEMENT PAR IMMERSION À CHAUD

(30) Priorität: 05.02.2013 DE 102013101134
(43) Veröffentlichungstag der Anmeldung: 16.12.2015
(73) Patentinhaber: ThyssenKrupp Steel Europe AG, 47166 Duisburg (DE)
(72) Erfinder: BERGEN, Jegor, 47495 Rheinberg (DE); SPELLEKEN, Frank, 46537 Dinslaken (DE); PETERS, Michael, 47533 Kleve (DE); RUTHENBERG, Manuela, 44143 Dortmund (DE); MACHEREY, Friedhelm, 46519 Alpen (DE); SPELZ, Florian, 46047 Oberhausen (DE)
(74) Vertreter: thyssenkrupp Intellectual Property GmbH
(86) Internationale Anmeldenummer: PCT/EP2014/050091
(87) Internationale Veröffentlichungsnummer: WO 2014/121956

(56) Entgegenhaltungen:
- FR-A1- 2 758 571
- GB-A- 1 574 814
- JP-A- H09 272 986

## Beschreibung

Die Erfindung betrifft ein metallisches, durch Schmelztauchbeschichten oberflächenveredeltes Flacherzeugnis, vorzugsweise aus Stahl, mit einer metallischen Legierungsschicht und einer darüberliegenden metallischen Deckschicht, die sich in ihrer chemischen Zusammensetzung voneinander unterscheiden, wobei beide Schichten in einem Prozessschritt hergestellt sind und einen kontinuierlichen Übergangsbereich definieren, in welchem eine Mischung der beiden unterschiedlichen chemischen Zusammensetzungen vorliegt, wobei die Legierungsschicht eine Dicke von weniger als 8 µm, vorzugsweise weniger als 6 µm aufweist, und wobei die Deckschicht aus Aluminium oder Zink gebildet ist.

Unter einem metallischen Flacherzeugnis wird im vorliegenden Kontext ein Erzeugnis mit etwa rechteckigem Querschnitt verstanden, dessen Breite viel größer als seine Dicke ist. Das Flacherzeugnis hat beispielsweise die Form eines Blechs, insbesondere einer Platine, oder eines Metallbandes.

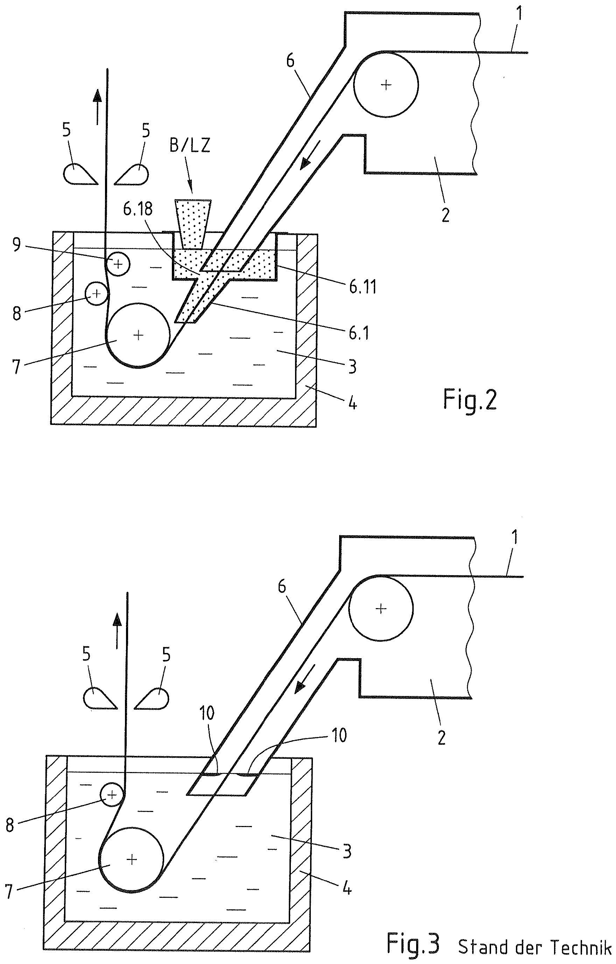

Das Schmelztauchbeschichten von Metallband, insbesondere Stahlband, ist ein seit vielen Jahren bekanntes Verfahren zur Oberflächenveredelung von Feinblechband, um dieses vor Korrosion zu schützen. In Fig. 3 ist in vertikaler Schnittansicht ein Abschnitt einer herkömmlichen Anlage zum Schmelztauchbeschichten eines Metallbandes 1 dargestellt. Ein entsprechend zu veredelndes Stahlband (Feinblechband) wird hierzu zunächst in einem Durchlaufofen 2 gereinigt und rekristallisierend geglüht. Anschließend wird das Band 1 schmelztauchveredelt, indem es durch ein schmelzflüssiges Metallbad 3 geführt wird. Als Beschichtungsmaterial für das Band 1 kommen beispielsweise Zink, Zinklegierungen, Reinaluminium oder Aluminiumlegierungen zum Einsatz.

Der Durchlaufofen 2 umfasst typischerweise einen direkt beheizten Vorwärmer und indirekt beheizte Reduktions- und Haltezonen sowie nachfolgende Kühlzonen. Am Ende der Kühlzone ist der Ofen 2 über eine Schleuse (Rüssel) 6 mit dem Schmelzbad 3 verbunden. Eine im Schmelzbad 3 angeordnete Umlenkrolle (Pottrolle) 7 bewirkt die Umlenkung des aus dem Rüssel 6 in das Schmelzbad eintretenden Bandes 1 in eine im Wesentlichen vertikale Richtung. Die Schichtdicke der als Korrosionsschutz dienenden Metallschicht wird üblicherweise mittels Abstreifdüsen 5 eingestellt.

Beim Durchgang eines Stahlbandes 1 durch das Schmelzbad 3 entsteht auf der Bandoberfläche eine Legierungsschicht aus Eisen und dem Beschichtungsmetall. Darüber bildet sich als Deckschicht die Metallschicht aus, deren Zusammensetzung der chemischen Analyse der im Schmelzbadgefäß 4 befindlichen Metallschmelze entspricht.

Abhängig von der Schmelzenzusammensetzung weist die Beschichtung unterschiedliche Eigenschaften auf, vor allem hinsichtlich der mechanischen und korrosionsschützenden Eigenschaften. Auch hat die Schmelzenzusammensetzung Einfluss auf die Oberflächengüte des beschichteten Bandes.

Bei einer herkömmlichen Schmelzbadtauchbeschichtung von Stahlband mit einer Aluminiumschmelze, die etwa 10 Gew.-% Silizium enthält, entsteht eine relativ dünne Legierungsschicht an der Grenzfläche Stahl-Beschichtungsmetall. Auf der Legierungsschicht entsteht eine Deckschicht aus Aluminium und eingelagerten Eisensiliziumnadeln. Diese unter der Bezeichnung FAL Typ 1 bekannte Beschichtung ist aufgrund der dünnen Legierungsschicht ausreichend duktil, um gewünschte Umformungen des beschichteten Flacherzeugnisses realisieren zu können. Der durch diese Beschichtung erzielte Korrosionsschutz ist aber nicht so gut wie bei einer Reinaluminiumbeschichtung (FAL Typ 2).

Der durch Verwendung einer Reinaluminiumschmelze erzeugte Überzug stellt einen hervorragenden Korrosionsschutz dar. Aufgrund des Nichtvorhandenseins von

Silizium in der Schmelze bildet sich jedoch eine relativ dicke spröde Legierungsschicht, die beim Umformen des beschichteten Flacherzeugnisses zur Rissbildung und zum Ablösen der Metallauflage neigt. Aufgrund der eingeschränkten Duktilität ist dieses Produkt (FAL Typ 2) nur für Bauteile geeignet, die keine größeren Umformungen erfordern.

Im Stand der Technik wird daher abhängig von der gewünschten Eigenschaft eine entsprechende Zusammensetzung des metallischen Schmelzbades gewählt, d.h. es erfolgt mit einer Kompromisslösung stets eine Gratwanderung zwischen den Anforderungen, wie beispielsweise der mechanischen Eigenschaft für die nachfolgende Umformung des beschichteten Feinblechs unter Vermeidung von Rissen in der Beschichtung oder einer Ablösung derselben einerseits und einem zuverlässigen Korrosionsschutz andererseits.

Des Weiteren ist es im Stand der Technik bekannt, schmelztauchveredelte Stahlbänder einer zusätzlichen Wärmebehandlung zu unterziehen, um die Gefahr einer Rissbildung und Beschichtungsablösung bei der Umformung zu verringern. Alternativ kann die Beschichtung auch in mehreren Arbeitsschritten aufgebracht werden. Diese Maßnahmen sind jedoch mit einem zusätzlichen Zeit- und Kostenaufwand verbunden. Zudem werden die Produkteigenschaften gegebenenfalls durch Oxidbildungen, z.B. zwischen den Arbeitsschritten, oder durch Gefügeveränderungen infolge der Wärmebehandlung beeinträchtigt.

Der vorliegenden Erfindung liegt die Aufgabe zugrunde, ein metallisches Flacherzeugnis der eingangs genannten Art mit verbesserter Beschichtung zu schaffen, welches die Anforderungen hinsichtlich einer guten Umformbarkeit sowie hinsichtlich eines hohen Korrosionsschutzes gleichsam besser erfüllt.

Zur Lösung dieser Aufgabe wird ein Flacherzeugnis mit den Merkmalen des Anspruchs 1 vorgeschlagen. Bevorzugte und vorteilhafte Ausgestaltungen des erfindungsgemäßen Flacherzeugnisses sind in den Unteransprüchen angegeben.

Das erfindungsgemäße Flacherzeugnis besteht vorzugsweise aus Stahl. Es weist aufgrund einer besonderen Schmelztauchbeschichtung eine metallischen Legierungsschicht und eine darüberliegende metallische Deckschicht auf, die sich in ihrer chemischen Zusammensetzung voneinander unterscheiden, wobei beide Schichten in einem Prozessschritt hergestellt sind und einen kontinuierlichen Übergangsbereich definieren, in welchem eine Mischung der beiden unterschiedlichen chemischen Zusammensetzungen vorliegt. Die Legierungsschicht weist eine Dicke von weniger als 8 µm, vorzugsweise weniger als 6 µm, besonders bevorzugt weniger als 5 µm auf. Die Deckschicht ist aus Aluminium oder Zink gebildet und im Wesentlichen frei von Silizium und weist eine Dicke von mehr als 4 µm, vorzugsweise mehr als 5 µm auf.

Das erfindungsgemäße Flacherzeugnis ist aufgrund der relativ dünnen Legierungsschicht ausreichend duktil, um gewünschte größere Umformungen realisieren zu können. Gleichzeitig besitzt es aufgrund der aus Zink gebildeten Deckschicht, die im Wesentlichen frei von Silizium ist, hervorragende Korrosionsschutzeigenschaften. Der Ausdruck "im Wesentlichen frei von Silizium" bedeutet im vorliegenden Kontext, dass die aus Zink gebildete Deckschicht bis auf unvermeidbare Verunreinigungen frei von Silizium ist.

Eine ausreichende Duktilität des Flacherzeugnisses lässt sich insbesondere dann erzielen, wenn die Legierungsschicht nach der Erfindung aus einer Silizium enthaltenden Metallschmelze gebildet ist.

Besonders gute Korrosionsschutzeigenschaften ergeben sich, wenn nach einer weiteren bevorzugten Ausgestaltung der Erfindung die Deckschicht aus Reinaluminium gebildet ist.

Gemäß der Erfindung ist das erfindungsgemäße Flacherzeugnis dadurch gekennzeichnet, dass die Deckschicht aus einer Aluminium und Zink enthaltenden Metallschmelze gebildet ist. Auch in dieser Ausgestaltung zeichnet sich das erfindungsgemäße Flacherzeugnis durch besonders gute Korrosionsschutzeigenschaften aus. Die unter der Deckschicht liegende Legierungsschicht ist dabei wiederum aus einer Silizium enthaltenden Metallschmelze gebildet.

Eine weitere Ausgestaltung des erfindungsgemäßen Flacherzeugnisses besteht darin, dass die Deckschicht aus einer Zink und Magnesium enthaltenden Metallschmelze gebildet ist. In diesem Fall ist die Legierungsschicht vorzugsweise aus einer Metallschmelze gebildet, die in Bezug auf den Aluminium- und Magnesiumgehalt der Deckschicht einen um mindestens 20% geringeren Aluminium- und Magnesiumgehalt aufweist. Besonders bevorzugt ist die Legierungsschicht jedoch aus einer Metallschmelze gebildet, die im Wesentlichen frei von Aluminium und Magnesium ist. Das erfindungsgemäße Flacherzeugnis zeichnet sich in diesen Ausgestaltungen wiederum durch eine ausreichende Duktilität und hervorragende Korrosionsschutzeigenschaften aus. Zudem hat es aufgrund des Magnesiums ein relativ geringes Gewicht (Deckschichtgewicht) sowie gute Schalldämpfungseigenschaften.

Um eine gute Verbindung zwischen der metallischen Legierungsschicht und der metallischen Deckschicht zu erzielen und damit die Gefahr einer Ablösung der metallischen Beschichtung beim Umformen des Flacherzeugnisses auszuschließen oder zumindest zu verringern, sieht eine weitere bevorzugte Ausgestaltung der Erfindung vor, dass die Dicke des zwischen der Legierungsschicht und der darüberliegenden Deckschicht vorhandenen kontinuierlichen Übergangsbereichs mindestens 2 µm, vorzugsweise mindestens 3 µm beträgt bzw. durch die erfindungsgemäße Ausgestaltung des Schmelztauchbeschichtens entsprechend eingestellt wird.

Nachfolgend wird die Erfindung anhand einer mehrere Ausführungsbeispiele darstellenden Zeichnung näher erläutert. Es zeigen schematisch:
- Fig. 1: eine vertikale Schnittansicht eines Schmelzbadgefäßes mit einem verlängerten Rüssel, einer Umlenkrolle und einer Stabilisierungsrolle;
- Fig. 2: ein weiteres Ausführungsbeispiel einer erfindungsgemäßen Vorrichtung mit einem vertikal geschnitten dargestellten Schmelzbadgefäß und zwei darin angeordneten Stabilisierungsrollen;
- Fig. 3: eine Vorrichtung zum Schmelztauchbeschichten von Metallband des Standes der Technik, in vertikaler Schnittansicht;
- Fig. 4: ein Schmelzbad einer Vorrichtung zum Schmelztauchbeschichten von Metallband des Standes der Technik;
- Fig. 5: ein Schmelzbad einer erfindungsgemäßen Vorrichtung zum Schmelztauchbeschichten von Metallband;
- Fig. 6: eine Querschnittansicht eines Abschnitts eines durch Tauchen in einer AlFeSi-Schmelze beschichteten Stahlbandes;
- Fig. 7: eine Querschnittansicht eines Abschnitts eines durch Tauchen in einer Reinaluminiumschmelze beschichteten Stahlbandes; und
- Fig. 8: eine Querschnittansicht eines Abschnitts eines durch Tauchen in zwei unterschiedliche metallische Schmelzen beschichteten Metallbandes.

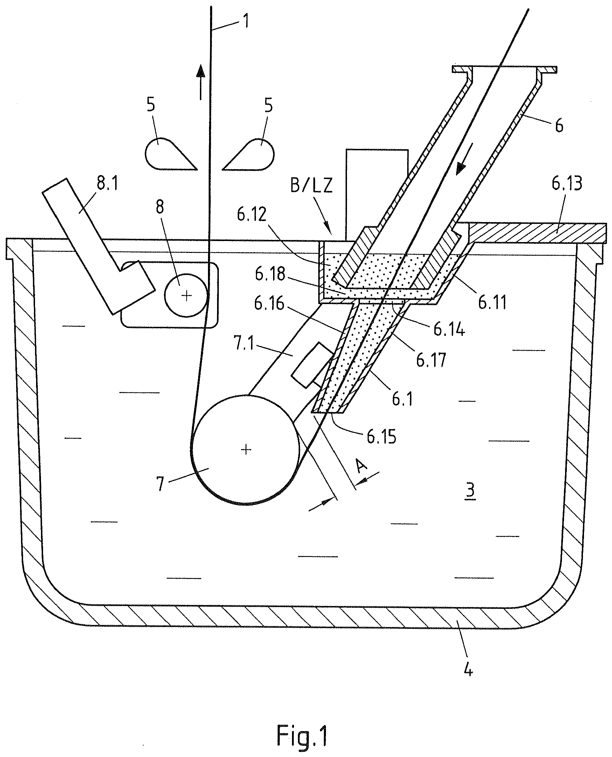

Bei den in den Figuren 1, 2 und 5 dargestellten Ausführungsbeispielen einer erfindungsgemäßen Vorrichtung zum Schmelztauchbeschichten von Metallband, insbesondere Stahlband, ist der Rüssel 6 einer gattungsgemäßen Beschichtungsanlage, die im Wesentlichen der Beschichtungsanlage gemäß Fig. 3 entsprechen kann oder entspricht, so ausgebildet, dass dem getauchten Abschnitt des Rüssels 6 Beschichtungsmaterial B und/oder mindestens ein Legierungszusatz LZ getrennt zugegeben werden kann. Die erfindungsgemäße Vorrichtung ist also so hergerichtet, dass in dem vom Rüssel 6 begrenzten Bereich eine Schmelze eingestellt bzw. verwendet werden kann, die in ihrer chemischen Zusammensetzung gezielt unterschiedlich zu der chemischen Zusammensetzung der im Schmelzbad 3 verwendeten Schmelze eingestellt ist oder wird.

Vorzugsweise ist der Rüssel 6 hierzu mit einem schachtförmigen Rüsselverlängerungsstück 6.1 zur Vergrößerung der Rüsseleintauchtiefe versehen. Das Rüsselverlängerungsstück 6.1 weist einen Anschlussabschnitt 6.11 auf, in den das untere Ende des Rüssels 6 hineinragt. Der Anschlussabschnitt 6.11 weist einen becken- oder wannenförmigen Aufnahmeraum 6.12, dessen umlaufende Seitenwandung an einem auf dem oberen Rand des Schmelzbadgefäßes 4 gelagerten Träger 6.13 befestigt ist. Im Boden des Anschlussabschnittes 6.11 bzw. Aufnahmeraums 6.12 ist eine längliche Öffnung 6.14 ausgebildet, durch die das zu beschichtende Metallband 1 in das schachtförmige Rüsselverlängerungsstück 6.1 läuft.

Der Rüssel 6 oder das Rüsselverlängerungsstücks 6.1 ist vorzugsweise so ausgebildet, dass sich seine lichte Innenweite bzw. lichte Innenhöhe zur Austrittsöffnung 6.15 hin zumindest über eine Teillänge verjüngt. Die Verjüngung der Innenweite bzw. Innenhöhe ergibt sich dadurch, dass die der Oberseite und Unterseite des Bandes 1 zugewandten Wände 6.16, 6.17 des Rüssels 6 oder Rüsselverlängerungsstücks 6.1 in Richtung Austrittsöffnung 6.15 konvergieren. Die Innenweite bzw. Innenhöhe des Rüssels oder Rüsselverlängerungsstücks 6.1 ist in diesen Ausführungsbeispielen vorzugsweise durch eine stetige Verjüngung gekennzeichnet.

Die Austrittsöffnung 6.15 oder engste Stelle des Rüsselverlängerungsstücks 6.1 besitzt vorzugsweise eine lichte Innenweite von maximal 120 mm, besonders bevorzugt maximal 100 mm. Des Weiteren ist das Rüsselverlängerungsstück 6.1 so bemessen, dass es gegenüber der Mantelfläche der Umlenkrolle 7 in einem Abstand A im Bereich von 100 mm bis 400 mm, vorzugsweise 100 mm bis 300 mm endet. Beispielsweise beträgt der Abstand A des unteren Endes des Rüsselverlängerungsstücks 6.1 von der Mantelfläche der Umlenkrolle 7 ca. 200 mm.

Wie an sich bekannt, ist der Umlenkrolle 7 eine Stabilisierungsrolle 8 zugeordnet, um einen planen, schwingungsfreien Durchgang des Bandes 1 durch die oberhalb des Schmelzbades angeordneten Flachdüsen 5 der Düsenabstreifvorrichtung sicherzustellen. Die Tragarme der Umlenkrolle 7 und der Stabilisierungsrolle 8 sind in Fig. 1 mit 7.1 und 8.1 bezeichnet. Des Weiteren kann die Stabilisierungsrolle 8 mit einer ebenfalls getaucht angeordneten Führungs- bzw. Andruckrolle 9 kombiniert sein (vgl. Fig. 2).

In den in den Figuren 1 und 2 dargestellten Ausführungsbeispielen der erfindungsgemäßen Vorrichtung definieren der Anschlussabschnitt 6.11 des Rüsselverlängerungsstücks 6.1 und der Rüssel 6 mindestens einen Zufuhrkanal 6.18, über den in den getauchten Abschnitt des Rüssels 6 und/oder in das Rüsselverlängerungsstück 6.1 Beschichtungsmaterial B und/oder mindestens ein Legierungszusatz LZ getrennt zugegeben werden kann.

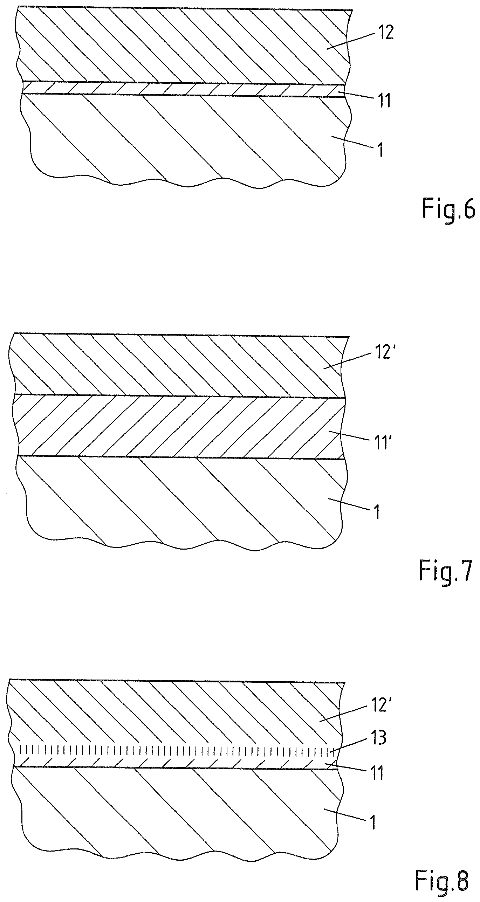

Die erfindungsgemäße Verlängerung des Rüssels 6 dient einer möglichst weitgehenden Entkopplung der im Rüssel 6 eingestellten bzw. verwendeten Schmelze von der im übrigen Schmelzbadgefäß 4 eingestellten/verwendeten Schmelze, die sich in ihrer chemischen Zusammensetzung von der im Rüssel 6 eingestellten/verwendeten Schmelze unterscheidet. Auf diese Weise ergeben sich im Schmelzbad 3 Bereiche mit unterschiedlichen Schmelzzusammensetzungen, um bestimmte gewünschte Legierungsschichteigenschaften einzustellen. Dies wird nachfolgend unter Bezug auf die Figuren 6 bis 8 näher erläutert.

Bei einer herkömmlichen Schmelzbadtauchbeschichtung von Stahlband mit einer Aluminiumschmelze, die etwa 10 Gew.-% Silizium enthält, bildet sich eine relativ dünne Legierungsschicht 11 an der Grenzfläche Stahl-Beschichtungsmetall (Fig. 6). Die Dicke der Legierungsschicht 11 beträgt beispielsweise ca. 4 µm. Auf die Legierungsschicht 11 folgt die Deckschicht 12 aus Aluminium und eingelagerten Eisensiliziumnadeln. Diese unter der Bezeichnung FAL Typ 1 bekannte Beschichtung ist aufgrund der dünnen Legierungsschicht 11 ausreichend duktil, um gewünschte Umformungen des beschichteten Stahlbandes 1 bzw. Stahlblechs zufriedenstellend realisieren zu können. Der durch diese Beschichtung erzielte Korrosionsschutz ist jedoch nicht so gut wie bei einer Reinaluminiumbeschichtung, die üblicherweise mit FAL Typ 2 bezeichnet wird.

Fig. 7 zeigt einen Abschnitt eines durch Tauchen in einer Reinaluminiumschmelze beschichteten Stahlbandes 1 im Querschnitt. Dieser Überzug stellt einen hervorragenden Korrosionsschutz dar. Mit 12' ist die Deckschicht aus Reinaluminium bezeichnet. Aufgrund des fehlenden Siliziums in der Schmelze bildet sich an der Grenzfläche Stahl-Beschichtungsmetall eine relativ dicke Legierungsschicht 11', die relativ spröde ist. Die Dicke der Legierungsschicht 11' kann beispielsweise bis zu 20 µm betragen. Die spröde Legierungsschicht 11' neigt beim Umformen des beschichteten Stahlbandes 1 bzw. Stahlblechs zur Rissbildung und zum Ablösen der Metallauflage. Aufgrund der eingeschränkten Duktilität ist dieses Produkt (FAL Typ 2) nur für einfache Bauteile geeignet, die keine größeren Umformungen erfordern.

Die in Fig. 1 oder Fig. 2 dargestellte erfindungsgemäße Vorrichtung, bei welcher der Rüssel 6 und der Anschlussabschnitt 6.11 des Rüsselverlängerungsstücks 6.1 mindestens einen Zufuhrkanal 6.18 definieren, ermöglicht es, im Rüssel 6 zum Beispiel eine siliziumhaltige Schmelze anzureichern, die zu einer dünnen Legierungsschicht 11 ähnlich der Legierungsschicht des Produktes FAL Typ 1 führt. Beispielsweise kann dem Rüssel 6 über den beckenförmige Anschlussabschnitt 6.11 des Rüsselverlängerungsstücks 6.1 und den Zufuhrkanal 6.18 ein AlFeSi-Beschichtungsmaterial zugegeben werden. Im eigentlichen Schmelzbadgefäß 4 wird dagegen vorzugsweise mit einer Reinaluminiumschmelze gearbeitet, so dass eine Deckschicht 12' aus Reinaluminium erhalten wird. Dieses in Fig. 8 skizzierte Produkt ("FAL Typ 3") vereinigt die Vorteile der Produkte FAL Typ 1 und FAL Typ 2. Denn man erhält so ein Produkt, welches durch die dünne Legierungsschicht 11 ausreichend duktil ist, um gewünschte größere Umformungen realisieren zu können, und welches zudem durch die Deckschicht 12' aus Reinaluminium hervorragende Korrosionsschutzeigenschaften besitzt.

Anstelle einer Reinaluminiumschmelze kann in dem Schmelzbadgefäß 4 auch eine andere metallische Schmelze verwendet werden. Beispielsweise kann in dem Schmelzbadgefäß 4 eine Aluminium-Zink-Schmelze verwendet werden, während in dem vom Rüssel 6 begrenzten Bereich eine Schmelze verwendet wird, die ebenfalls auf einer Aluminium-Zink-Schmelze basiert, der jedoch zusätzlich Silizium zur Unterdrückung oder Verringerung der Legierungsschicht zugegeben wird oder wurde, wodurch eine verbesserte Umformbarkeit erreicht wird.

Ein weiteres Beispiel für die erfindungsgemäße Verwendung von Schmelzen mit unterschiedlichen chemischen Zusammensetzungen ist die Verwendung einer Zink-Magnesium-Schmelze im Schmelzbadgefäß 4, während im Rüssel 6 eine Schmelze mit verringertem Zink-, Aluminium- und/oder Magnesiumgehalt verwendet wird. Auf diese Weise lassen sich Benetzungsfehler in der Beschichtung des Bandes 1 verringern und somit die Oberflächengüte des schmelztauchbeschichteten Bandes verbessern.

Bei Beschichtungsanlagen des Standes der Technik gemäß Fig. 3 sammelt sich auf der Oberfläche der Schmelze 3 innerhalb des Rüssels 6 mitunter Schlacke 10 an, die zu Fehlern in der Beschichtung des Metallbandes 1 führen kann. Untersuchungen haben ergeben, dass sich derartige schlackebedingte Beschichtungsfehler durch die Vergrößerung der Eintauchtiefe des Rüssels 6 in Verbindung mit einer Verjüngung der lichten Innenweite bzw. lichten Innenhöhe des getauchten Rüsselverlängerungsstücks 6.1 zur Austrittsöffnung 6.15 hin vermeiden lassen. Die Verjüngung des Rüsselverlängerungsstücks 6.1 in Richtung der Austrittsöffnung 6.15 trägt zudem zur Entkopplung der unterschiedlichen Schmelzen bei, die im Rüssel 6 und im übrigen Schmelzbadgefäß 4 verwendet werden.

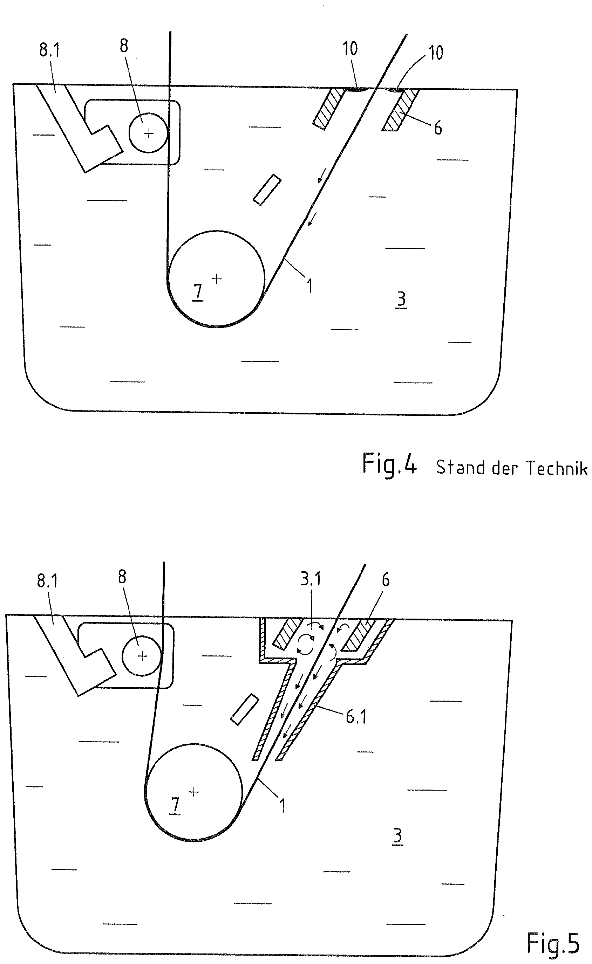

In den Figuren 4 und 5 ist die Geschwindigkeitsverteilung der sich im Schmelzbadgefäß beim Betrieb einer Beschichtungsvorrichtung des Standes der Technik (Fig. 4) und beim Betrieb einer erfindungsgemäßen Beschichtungsvorrichtung (Fig. 5) einstellenden Schmelzeströmung skizziert. Ein Vergleich der Figuren 4 und 5 verdeutlicht, dass durch die Rüsselverlängerung 6.1 die Strömung im Rüssel 6, insbesondere in dem vom Rüssel 6 eingeschlossenen Bereich 3.1 des Schmelzbadspiegels intensiviert wird, was einen ständigen Austausch der Schmelze an der Schmelzbadoberfläche im Rüssel 6 bewirkt. Somit kann sich in dem vom Rüssel 6 eingeschlossenen Bereich 3.1 des Schmelzbadspiegels keine Schlacke ansammeln, die Oberflächenfehler in der Beschichtung des Bandes 1 verursacht.

Die Ausführung der Erfindung ist nicht auf die in der Zeichnung dargestellten Ausführungsbeispiele beschränkt. Vielmehr sind mehrere Varianten denkbar, die auch bei abweichender Gestaltung von der in den beiliegenden Ansprüchen angegebenen Erfindung Gebrauch machen.

## Patentansprüche

1. Metallisches, durch Schmelztauchbeschichten oberflächenveredeltes Flacherzeugnis mit einer metallischen Legierungsschicht (11) und einer darüberliegenden metallischen Deckschicht (12'), die sich in ihrer chemischen Zusammensetzung voneinander unterscheiden, wobei die Legierungsschicht (11) eine Dicke von weniger als 8 µm aufweist, und wobei die Deckschicht (12') aus einer Aluminium und Zink oder aus einer Zink und Magnesium enthaltenden Metallschmelze gebildet ist, und die Deckschicht (12') eine Dicke von mehr als 4 µm aufweist, **dadurch gekennzeichnet, dass** beide Schichten (11, 12') in einem Prozessschritt hergestellt sind und einen kontinuierlichen Übergangsbereich (13) definieren, in welchem eine Mischung der beiden unterschiedlichen chemischen Zusammensetzungen vorliegt, dass die Deckschicht (12') im Wesentlichen frei von Silizium ist, und dass die Legierungsschicht (11) aus einer Silizium enthaltenden Metallschmelze gebildet ist.

2. Flacherzeugnis nach Anspruch 1, **dadurch gekennzeichnet, dass** die Deckschicht (12') aus einer Zink und Magnesium enthaltenden Metallschmelze gebildet ist und dass die Legierungsschicht (11) aus einer Metallschmelze gebildet ist, die in Bezug auf den Aluminium- und Magnesiumgehalt der Deckschicht (12') einen um mindestens 20% geringeren Aluminium- und Magnesiumgehalt aufweist.

3. Flacherzeugnis nach Anspruch 1, **dadurch gekennzeichnet, dass** die Deckschicht (12') aus einer Zink und Magnesium enthaltenden Metallschmelze gebildet ist und dass die Legierungsschicht (11) aus einer Metallschmelze gebildet ist, die im Wesentlichen frei von Aluminium und Magnesium ist.

4. Flacherzeugnis nach einem der Ansprüche 1 bis 3, **dadurch gekennzeichnet, dass** die Dicke des zwischen der metallischen Legierungsschicht (11) und der darüberliegenden metallischen Deckschicht (12') vorhandenen kontinuierlichen Übergangsbereichs (13) mindestens 2 µm beträgt.

5. Flacherzeugnis nach einem der Ansprüche 1 bis 4, **dadurch gekennzeichnet, dass** das Flacherzeugnis aus Stahl ist.

6. Flacherzeugnis nach einem der Ansprüche 1 bis 5, **dadurch gekennzeichnet, dass** die Legierungsschicht (11) eine Dicke weniger als 6 µm aufweist, und dass die Deckschicht (12') eine Dicke von mehr 5 µm aufweist.

## Claims

1. Metallic flat product subjected to surface refinement by hot dip coating, having a metallic alloy layer (11) and, situated above the latter, a metallic surface layer (12'), which layers differ from one another in terms of their chemical composition, wherein the alloy layer (11) comprises a thickness of less than 8 µm, and wherein the surface layer (12') is formed from a metal melt comprising aluminium and zinc or from a metal melt comprising zinc and magnesium, and the surface layer (12') comprises a thickness of greater than 4 µm, **characterized in that** both layers (11, 12') are produced in one process step and define a continuous transition region (13) in which a mixture of the two different chemical compositions is present, **in that** the surface layer (12') is substantially free from silicon, and **in that** the alloy layer (11) is formed from a metal melt comprising silicon.

2. Flat product according to Claim 1, **characterized in that** the surface layer (12') is formed from a metal melt comprising zinc and magnesium, and **in that** the alloy layer (11) is formed from a metal melt which comprises an aluminium and magnesium content at least 20% lower in relation to the aluminium and magnesium content of the surface layer (12').

3. Flat product according to Claim 1, **characterized in that** the surface layer (12') is formed from a metal melt comprising zinc and magnesium, and **in that** the alloy layer (11) is formed from a metal melt which is substantially free from aluminium and magnesium.

4. Flat product according to any of Claims 1 to 3, **characterized in that** the thickness of the continuous transition region (13) provided between the metallic alloy layer (11) and the metallic surface layer (12') situated above said alloy layer amounts to at least 2 µm.

5. Flat product according to any of Claims 1 to 4, **characterized in that** the flat product is composed of steel.

6. Flat product according to any of Claims 1 to 5, **characterized in that** the alloy layer (11) comprises a thickness of less than 6 µm, and **in that** the surface layer (12') comprises a thickness of greater than 5 µm.

## Revendications

1. Produit plat, métallique, à surface valorisée et revêtu par immersion à chaud, le produit plat comprenant une couche d'alliage métallique (11) et une couche de recouvrement (12') métallique sus-jacente de composition chimique différente, ladite couche d'alliage (11) ayant une épaisseur inférieure à 8 µm, et la couche de recouvrement (12') étant formée à partir d'aluminium et de zinc ou d'un métal en fusion contenant du zinc et du magnésium, et la couche de recouvrement (12') ayant une épaisseur supérieure à 4 µm, **caractérisé en ce que** les deux couches (11, 12') sont produites en une étape de procédé et définissent une région de transition continue (13) dans laquelle un mélange des deux compositions chimiques différentes est présent, **en ce que** la couche de recouvrement (12') est sensiblement dépourvue de silicium et **en ce que** la couche d'alliage (11) est formée à partir d'un métal en fusion contenant du silicium.

2. Produit plat selon la revendication 1, **caractérisé en ce que** la couche de recouvrement (12') est formée à partir d'un métal en fusion contenant du zinc et du magnésium, et **en ce que** la couche d'alliage (11) est formée à partir d'un métal en fusion qui contient au moins 20 % d'aluminium et de magnésium de moins que la teneur en aluminium et en magnésium de la couche de recouvrement (12').

3. Produit plat selon la revendication 1, **caractérisé en ce que** la couche de recouvrement (12') est formée à partir d'un métal en fusion contenant du zinc et du magnésium et **en ce que** la couche d'alliage (11) est formée à partir d'un métal en fusion qui est sensiblement dépourvu d'aluminium et de magnésium.

4. Produit plat selon l'une des revendications 1 à 3, **caractérisé en ce que** l'épaisseur de la région de transition continue (13) présente entre la couche d'alliage métallique (11) et la couche de recouvrement (12') métallique sus-jacente est d'au moins 2 µm.

5. Produit plat selon l'une des revendications 1 à 4, **caractérisé en ce que** le produit plat est en acier.

6. Produit plat selon l'une des revendications 1 à 5, **caractérisé en ce que** la couche d'alliage (11) a une épaisseur inférieure à 6 µm et la couche de recouvrement (12') a une épaisseur supérieure à 5 µm.
